Europäisches Patentamt

European Patent Office

Office européen des brevets

(19)

(11) Numéro de publication : **0 097 575**
**B1**

(12)

# FASCICULE DE BREVET EUROPÉEN

(45) Date de publication du fascicule du brevet :
09.09.87

(51) Int. Cl.⁴ : **G 02 B   6/38**

(21) Numéro de dépôt : 83401192.6

(22) Date de dépôt : 10.06.83

(54) **Fiche pour connecteur de fibres optiques, et connecteur la comportant.**

(30) Priorité : 22.06.82 FR 8210906

(43) Date de publication de la demande :
04.01.84 Bulletin 84/01

(45) Mention de la délivrance du brevet :
09.09.87 Bulletin 87/37

(84) Etats contractants désignés :
DE GB IT

(56) Documents cités :
EP-A- 0 051 507
FR-A- 2 485 754
GB-A- 1 545 302
GB-A- 2 027 924
US-A- 4 140 366
US-A- 4 205 898
US-A- 4 258 977
IEEE TRANSACTIONS ON COMMUNICATIONS, vol.
COM-26, no. 7, juillet 1978, pages 1068-1076, IEEE,
New York, USA, D.C. HANSON et al.: "Integrated
transducer modules, connectors and cable for industrial fiber optic data links"

(73) Titulaire : **SOCAPEX**
**10 bis, quai Léon Blum**
**F-92153 Suresnes (FR)**

(72) Inventeur : **Parchet, Pierre**
**THOMSON-CSF SCPI 173, bld Haussmann**
**F-75379 Paris Cedex 08 (FR)**
Inventeur : **Desmurs, Roland**
**THOMSON-CSF SCPI 173, bld Haussmann**
**F-75379 Paris Cedex 08 (FR)**

(74) Mandataire : **Brullé, Jean et al**
**Service Brevets Bendix 44, rue François 1er**
**F-75008 Paris (FR)**

EP 0 097 575 B1

## Description

La présente invention a pour objet un connecteur de fibres optiques.

On connaît déjà de la demande de brevet européen N° 51 507 une fiche pour connecteur de fibres optiques destinée à être montée sur un raccord et comportant un embout dans lequel au moins une fibre optique est positionnée avec précision à une de ses extrémités ainsi qu'un corps de fiche. L'embout et le corps de fiche présentent des moyens coopérant de telle sorte que l'embout est flottant dans le corps de fiche. L'embout est poussé en butée contre une extrémité aval du corps de fiche grâce à un élément de rappel élastique.

Une telle fiche est utilisable pour le raccordement d'embouts cylindriques.

Le brevet US 4 258 977 divulgue un connecteur pour fibres optiques, chaque fibre optique étant équipée d'un corps de fiche et d'un embout. Le connecteur comprend également un raccord rendant solidaire les corps de fiche. Ce connecteur possède des moyens de positionnement angulaire entre embout et corps de fiche correspondant et également entre les corps de fiche et le raccord.

La présente invention a pour objet un connecteur de fibres optiques du type précité, qui est utilisable également pour connecter des embouts cylindriques, mais qui est plus particulièrement adapté au raccordement d'embouts présentant un V d'alignement.

Selon l'invention, l'embout est rendu flottant dans le corps de fiche grâce à une pluralité de projections disposées à l'extrémité aval du corps de fiche et un nombre correspondant de rainures disposées sur l'embout de telle sorte que celui-ci ait un degré de liberté de rotation limité autour de son axe, le corps de fiche comportant des nervures qui s'emboîtent dans des rainures internes du raccord pour orienter angulairement le corps de fiche dans le raccord, et le corps de fiche coopérant avec un dispositif de verrouillage destiné à le monter rigidement sur le raccord.

Cette disposition particulière de l'embout flottant confère à celui-ci tous les degrés de liberté souhaitables à savoir d'une part le degré de liberté de rotation mentionné ci-dessus, mais qui est limité dans son amplitude de manière que l'action de détrompage soit effectivement exercée, un degré de liberté de translation grâce au rappel élastique de l'embout contre le corps de fiche, un degré de liberté de translation parallèlement à son axe, et le degré de liberté de rotation de la fiche par rapport à son extrémité amont, dû au fait que la liaison coopérante des doigts et des projections constituent approximativement une rotule.

Selon un mode de réalisation de l'invention, l'embout présente une collerette formant butée pour l'embout sur les projections du corps de fiche et dans laquelle sont ménagées lesdites rainures.

L'élément de rappel élastique peut être un ressort comprimé dans le corps de fiche par un limiteur bloqué dans le corps de fiche par un écrou arrière. Une ferrule cylindrique de maintien de la gaine d'un câble peut présenter une zone plus large et être bloquée dans le corps de fiche par l'écrou arrière. La ferrule est de préférence associée à une canule cylindrique dans laquelle est passée la gaine du câble et autour de laquelle est passé à retournement un élément de la gaine du câble résistant à la traction, la ferrule et la canule étant serties ensemble.

Le dispositif de verrouillage peut être avant vissage déplaçable longitudinalement, ses mouvements étant limités à l'avant par le corps de fiche où il assure le verrouillage et vers l'arrière par l'écrou arrière. Le dispositif de verrouillage peut être une bague de verrouillage filetée et vissable sur le raccord et portant une collerette s'appuyant en position de verrouillage sur une collerette du corps de fiche.

L'invention concerne également un connecteur comportant deux fiches telles que définies ci-dessus et un raccord comportant un dispositif d'alignement solidaire d'un corps de raccord cylindrique, présentant à chaque extrémité un filetage et au moins un deuxième élément de détrompage complémentaire du premier de manière à réaliser le détrompage et le guidage de la fiche dans le raccord.

Le dispositif d'alignement présente un V et des moyens de rappel élastique pour plaquer les V de chacun des embouts des fiches sur ceux du dispositif d'alignement. Le dispositif d'alignement peut être un manchon rapporté dans le raccord. Il peut être aussi constitué par une section comportant une gorge en forme de V coopérant avec chaque embout de raccordement, les extrémités des branches de la gorge en forme de V étant reliées entre elles de manière à former une cavité de forme sensiblement complémentaire à celle de l'embout correspondant, des moyens élastiques étant disposés dans le manchon d'alignement, sensiblement au-dessus du fond de la gorge en forme de V, de manière à plaquer chaque embout au fond de la gorge du manchon d'alignement.

Le connecteur ainsi constitué présente donc dans tous les cas un corps de fiche monté rigidement sur le raccord, un embout flottant dans le corps de fiche et possédant tous les degrés de liberté souhaitable, et un dispositif d'alignement qui n'est pas flottant dans le raccord.

L'invention sera mieux comprise à la lecture de la description qui va suivre, donnée à titre d'exemple non limitatif, en se reportant aux dessins annexés où :

la figure 1 représente en perspective une fiche suivant l'invention ;

les figures 2a et 2b représentent respectivement en coupe longitudinale et en vue de face un corps de fiche suivant l'invention ;

la figure 3 représente en coupe longitudinale une bague de verrouillage selon l'invention ;

la figure 4 représente en coupe longitudinale un écrou arrière selon l'invention ;

la figure 5 représente en coupe longitudinale un câble à fibres optiques serti à l'aide d'une canule et d'une ferrule selon l'invention ;

les figures 6a et 6b représentent respectivement en vue latérale et en vue de face un embout suivant l'invention ;

la figure 7 représente en vue latérale un limiteur selon l'invention ;

les figures 8 et 9 représentent respectivement en coupe longitudinale et en coupe transversale XX un raccord selon l'invention, et comportant un manchon fixe dans une embase cylindrique.

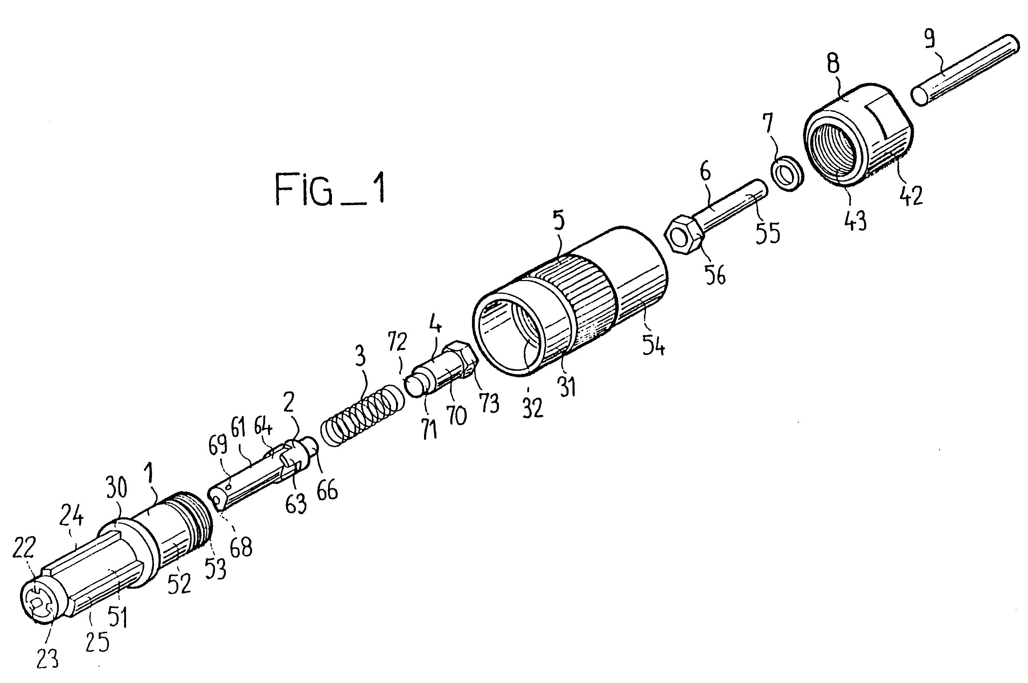

La fiche représentée à la figure 1 comporte un corps de fiche 1 présentant à sa partie avant des projections 22 et 23 ainsi que des nervures 24, 25 destinées à orienter le corps de fiche dans le raccord, et une collerette 30. Un embout 2 muni d'un V 62 comporte à son extrémité aval 68 une fibre optique positionnée avec précision. Il présente à sa partie arrière une collerette 67 dans laquelle sont ménagées des rainures 63 et 64 destinées à coopérer avec les projections 22 et 23. La gaine du câble à fibres optiques est maintenue par sertissage grâce à une ferrule 6, une canule 9 et une rondelle 7. La ferrule 6 présente à sa partie avant une collerette 56 à n pans (ici n = 6). un limiteur 4 à travers lequel passe la fibre optique présente à sa partie avant un logement 71 pour un ressort 3 et à sa partie arrière une collerette 73 à n pans (ici n = 6). Une bague de verrouillage 5 pourvue d'une collerette intérieure destinée à venir en appui sur la collerette 30 du corps de fiche est destinée à être vissée sur le raccord par son filetage 32 de telle sorte que le corps de fiche soit verrouillé rigidement sur le raccord. Le montage de la fiche est réalisé grâce à un écrou arrière 8 présentant un filetage 43 venant se visser dans un filetage 53 correspondant de la partie arrière du corps de fiche. Cet écrou arrière 8, associé à la rondelle 7 lui assurant une meilleure portée, maintient en position le limiteur 4 et la ferrule 6 dans un logement à n pans (ici n = 6) disposé à l'arrière du corps de fiche 1, l'embout 2 étant maintenu en position de manière flottante par le ressort 3. La bague de verrouillage 5 est susceptible d'un débattement longitudinal entre la collerette 30 et la partie avant de l'écrou arrière 8.

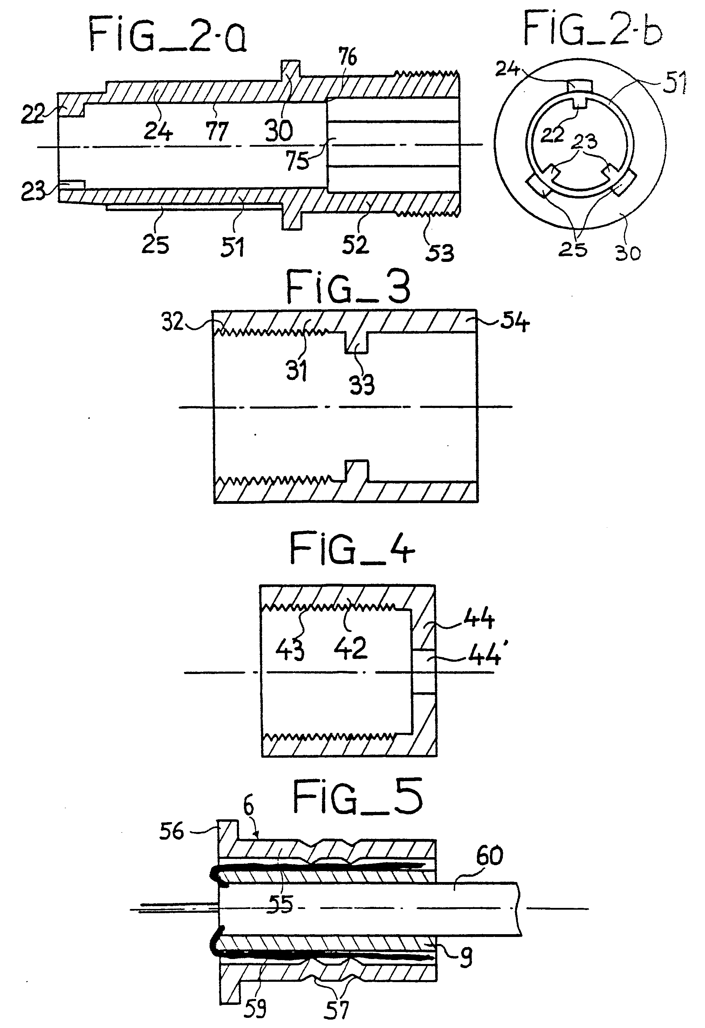

Selon les figures 2a et 2b, le corps de fiche 1 comporte une partie cylindrique avant 51 pourvue de nervures 24 et 25 destinées à l'orientation de la fiche dans le raccord. Ces nervures se composent de deux nervures 25 décalées de 90° et d'une nervure 24 décalée de 135° par rapport à chacune des nervures 25 de manière à réaliser un détrompage de la fiche dans le raccord. A l'intérieur de la partie cylindrique avant 51, et à l'extrémité de celle-ci, sont disposées des clés de détrompage composées de deux projections 23 espacées angulairement de 90° et d'une projection 22 espacée de 135° par rapport à chacune des projections 23. Les projections 22 et 23 sont constituées par des nervures de faible longueur. Les nervures externes 24 et 25 se prolongent jusqu'à la collerette 30. Le corps de fiche 1 comporte également une partie cylindrique arrière 52 pourvue d'un filetage externe 53. La partie cylindrique arrière 52 comporte sur une partie de sa longueur un logement 75 à six pans creux destiné à recevoir les collerettes 73 et 56 respectivement du limiteur 4 et de la ferrule 6. Le logement 75 se prolonge jusqu'à se raccorder à une partie cylindrique interne 77 et forme ainsi un décrochement 76 dans lequel le limiteur 4 vient en butée. La longueur du logement 75 est donc au plus égale à la somme de la longueur de la collerette 73 et de celle de la collerette 66.

Selon la figure 3, la bague de verrouillage 5 comporte un cylindre 31 à l'avant duquel est ménagé un filetage intérieur 32 s'étendant jusqu'à une collerette intérieure 33, et se prolonge vers l'arrière par une partie cylindrique d'extrémité 54 qui, lorsque la fiche est verrouillée sur le raccord, forme un capot dissimulant partiellement l'écrou arrière.

Sur la figure 4, l'écrou arrière comporte une partie cylindrique 42 filetée intérieurement et une paroi arrière 44 percée d'un trou axial 44' de diamètre plus grand que celui de la partie cylindrique 55 de la ferrule 6.

Selon la figure 5, la ferrule 6 comporte une partie cylindrique 55 se terminant par la collerette à six pans 56, la canule 9 d'égale longueur est disposée à l'intérieur de la ferrule 6 et les éléments de renforcement 59 de la gaine du câble, par exemple en fibre aramide (KEVLAR), sont rabattus avec retournement et sont ainsi emprisonnés entre la canule 9 et la ferrule 6 grâce à un sertissage 57. La gaine 60 du câble ne se prolonge pas au-delà de la collerette 56.

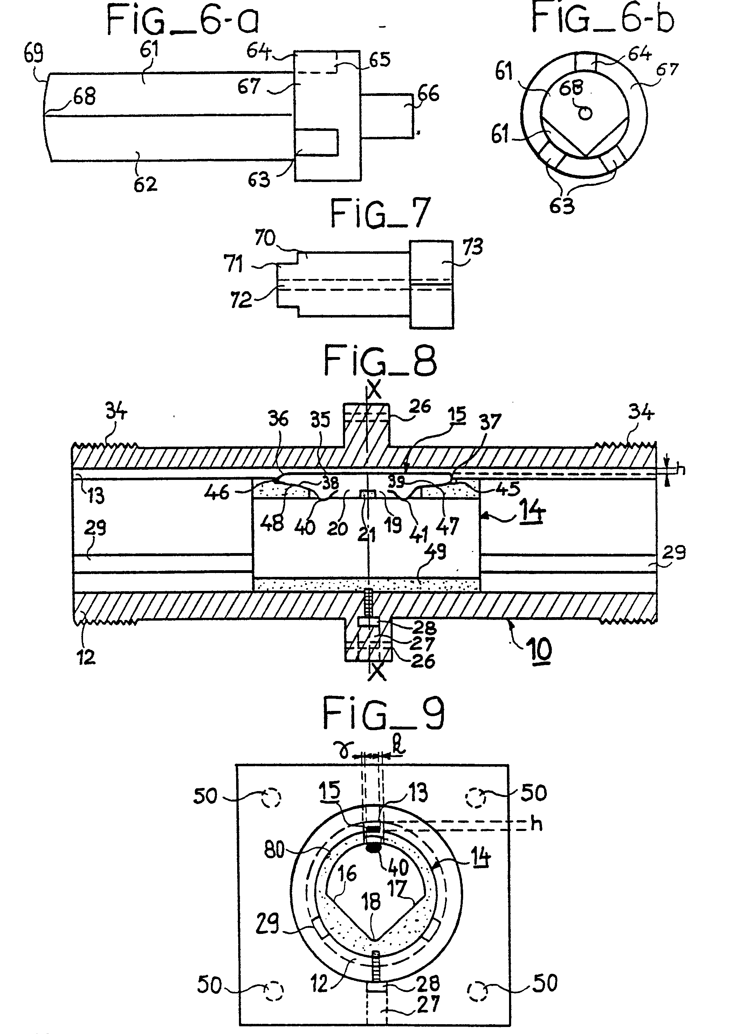

Selon les figures 6a et 6b, l'embout flottant 2 comporte une partie cylindrique avant 61 le long de laquelle sont ménagés deux pans coupés orthogonaux 62 formant un V. La partie cylindrique 61 se termine à l'avant par un arrondi 69 au centre duquel une fibre optique est positionnée avec précision en 68. L'extrémité arrière de la partie cylindrique 61 se prolonge par une collerette 67 dans laquelle sont ménagées des rainures 64 et 63. Ces rainures sont espacées angulairement de la même façon que les projections 22 et 23. Le fond 65 des rainures sert de butée à l'embout 2 pour les projections du corps de fiche 1. Les rainures 63 et 64 sont légèrement plus larges que les projections correspondantes respectivement 23 et 22, ce qui confère à l'embout un degré de liberté de rotation selon son axe mais limité en amplitude. La collerette 67 se prolonge vers l'arrière par une partie cylindrique 66 destinée à recevoir autour d'elle le ressort 3.

Selon la figure 7, le limiteur 4 comporte une partie cylindrique 70 qui se prolonge vers l'avant par une partie cylindrique de diamètre plus faible 71 destinée également à recevoir le ressort 3, et par son autre extrémité par une collerette à six pans 73. Un alésage 72 permet le passage libre de la fibre optique. Lorsque la fiche est assemblée, le ressort 3 appuie l'embout 2 en butée contre les projections du corps de fiche 1 et un intervalle subsiste entre les deux parties cylindriques 66 et 71 de l'embout et du limiteur. Cet intervalle détermine le débattement axial de l'embout flottant en son déplacement vers l'arrière. Il est préférable que ce débattement soit limité de telle manière qu'en position de recul maximal pour l'embout, les rainures de celui-ci restent engagées dans les projections du corps de fiche.

Le montage d'une fibre est réalisé une fois assemblées les pièces 1 à 8 de la fiche. La gaine du câble est dénudée sur une longueur donnée de manière à laisser dépasser une longueur suffisante de fibre optique, par exemple environ 60 mm. Les éléments de renforcement 59 de la gaine du câble sont rabattus vers l'arrière autour de la canule 9 préalablement enfilée sur la gaine du câble. On fait ensuite coulisser la fibre dans les alésages du limiteur 4 et de l'embout flottant et la gaine du câble est enfilée dans la canule 9 jusqu'à venir en butée dans le limiteur 4. On réalise alors le sertissage 57 comme représenté a la figure 5. Le centrage de la fibre par rapport au V 62 est ensuite réalisé en utilisant un appareillage connu en soi, par exemple du type mettant en œuvre deux V de positionnement parallèles mais dont les axes sont décalés verticalement l'un par rapport à l'autre. Le premier V reçoit l'extrémité de l'embout et le deuxième V reçoit la fibre optique dépassant de l'embout 2. L'embout 2 et la fibre sont maintenus en position au fond des V par des brides. Le décalage vertical entre les V est choisi de manière telle que la fibre soit précisément positionnée en un endroit donné par rapport aux bords du V. La fibre optique est alors fixée en position à l'extrémité 68 de l'embout grâce à l'introduction de colle par un trou 69 ménagé à la partie supérieure de la partie cylindrique 61. La fibre est ensuite coupée et polie.

La fiche assemblée comporte donc un corps de fiche et un embout flottant présentant un degré de liberté longitudinal grâce au rappel du ressort 3, un degré de liberté en rotation autour de son axe grâce au fait que les rainures 63 et 64 sont plus larges que les projections 23 et 22 correspondantes. L'embout possède également un degré de liberté par translation parallèlement à son axe et une liberté de rotation sensiblement autour de son extrémité arrière grâce au jeu mécanique existant d'une part entre le diamètre extérieur de la collerette 67 et le diamètre intérieur 77 de la partie cylindrique avant du corps de fiche 1, et d'autre part entre le diamètre délimitant le fond des rainures 63 et 64 de l'embout 2 et le diamètre intérieur dans lequel s'inscrivent les projections 22 et 23. En pratique, les jeux choisis seront en rapport avec les tolérances de fabrication des pièces formant le connecteur. Dans l'exemple représenté, le diamètre à fond des rainures 63 et 64 est égal à celui de la partie cylindrique avant 61 de l'embout 2.

A titre d'exemple, pour un diamètre intérieur de la partie cylindrique interne 77 du corps de fiche égal à 5,6 mm et une hauteur de projections égale à 0,6 mm, on choisit un jeu axial de 1,5 dixième de mm, et sur l'embout les rainures ont une largeur de 2 mm pour une largeur de projections égale à 1,6 mm de manière à permettre la rotation de l'embout sur lui-même. La distance de recul de l'embout sera choisie de l'ordre de 0,6 mm.

Dans ces conditions, l'embout flottant 2 présente tous les degrés de liberté nécessaires à son montage et peut donc être facilement monté dans différents types de connecteurs. En particulier, le degré de liberté de translation dans la direction axiale produit un recul de la fibre optique dans la fiche. Il faut donc que les alésages de l'embout, du limiteur et de la canule aient un diamètre suffisant pour que la fibre puisse coulisser librement. Si le câble auquel est reliée la fibre est du type où les fibres sont disposées librement (dans des rainures ou dans des tubes), le recul de la fibre optique sera absorbé sans difficulté par le câble. Par contre, si le câble est du type où les fibres sont câblées de manière classique, c'est-à-dire pratiquement sans jeu, il conviendra de prévoir une région où la fibre sera déposée librement de manière à absorber le recul de la fibre sans que des contraintes soient exercées sur celle-ci. On sait, en effet, qu'au-delà d'un certain seuil, les contraintes exercées sur les fibres optiques et dues notamment à un rayon de courbure trop faible provoquent un affaiblissement supplémentaire de la lumière transmise. En pratique, cette région, par exemple ménagée dans le limiteur, sera constituée par un canal de diamètre 4 mm, et de longueur égale à au moins 10 fois (et par exemple 15 fois) la distance de recul de l'embout. Il va de soi que dans cette variante, il faudra limiter la distance de recul de l'embout à la valeur la plus faible compatible avec les tolérances des pièces du connecteur.

La pluralité de degrés de liberté de l'embout flottant est particulièrement avantageuse dans le cas où le raccord utilisé comporte un dispositif d'alignement des fiches qui est solidaire du corps de raccord.

Selon une première variante, le corps de raccord est un cylindre comportant un V d'alignement (constituant le dispositif d'alignement) venant directement de moulage à la partie inférieure de l'alésage axial du corps de raccord. Un ressort à lame pour chaque fibre est serti à la partie supérieure de cet alésage de manière à pousser celle-ci contre le V d'alignement.

Selon les figures 8 et 9, un manchon d'alignement 14 a une section en forme de V constituée par deux parois 16 et 17, réunies entre elles par une paroi semi-cylindrique 80. Cette paroi 80 a essentiellement pour fonction de rigidifier le manchon et éviter les déformations du V. Sur sa partie supérieure, sensiblement au-dessus du fond de la rainure 18 de la gorge en V, se trouvent deux ouvertures 19 et 20 séparées entre elles par une languette 21. Cette languette permet de donner plus de rigidité au manchon d'alignement 14, de sorte que la paroi semi-cylindrique 60 maintient toujours efficacement les deux parois en V 16 et 17 sans modification de l'angle entre lesdites parois au cours des manipulations auxquelles le manchon d'alignement est soumis. Une languette élastique 15 vient se loger dans les ouvertures 19 et 20 et coopérer avec le manchon d'alignement 14.

Le corps de raccord est constitué par une embase 10. L'embase 10 comporte essentiellement un corps extérieurement cylindrique séparé par une collerette 26 munie d'ouvertures de fixation 50. L'embase 10 possède au niveau de la collerette 26 un trou 27 débouchant à l'intérieur de la cavité cylindrique de l'embase permettant le passage d'une vis 28 pour la fixation du manchon d'alignement 14.

Le corps de raccord est constitué par une embase 10. L'embase 10 possède une cavité interne de forme sensiblement cylindrique munie de rainures de guidage et détrompage 13 et 29. Ces rainures sont situées parallèlement à l'axe de l'embase cylindrique 10 et sont de largeurs différentes et de positions angulaires relatives bien précises de manière à permettre le raccordement sans difficulté de la fiche (voir plus haut).

Sur la figure 8, plus particulièrement, on notera la position de la languette élastique 15. Cette languette est maintenue par les rebords latéraux de la rainure 13. Le manchon 14 étant rendu solidaire de l'embase 1 par la vis de fixation 8, la languette 15 est maintenue longitudinalement dans la rainure 13 par des rebords 45 et 46 avec un certain jeu, facilitant le montage, mais limité pour maintenir la symétrie de l'ensemble par rapport à l'axe XX. La languette élastique 15 comporte des bras 38 et 39 reposant ici respectivement sur des rebords inclinés 48 et 47 du manchon d'alignement 14 et des bossages 40 et 41, qui après montage, débouchent bien entendu dans le canal intérieur du manchon d'alignement 14. On notera également le jeu h entre la partie plate 35 de la languette élastique 15 et le fond de la rainure 13 en l'absence d'embouts de raccordement. Lors de l'introduction de ceux-ci, le bras 35 formant la partie plane de la languette 15 est plaqué au fond de la rainure 13, la forme des bossages et l'inclinaison des bras 38 et 39 par rapport à la partie plane 35 devant être suffisantes pour permettre à la languette 15 d'assurer sa fonction de plaquage de l'embout en V 23 au fond de la rainure délimitée par les plans 16 et 17 du V. On notera également que la fixation du manchon d'alignement 14 au corps de l'embase 10 à l'aide de la vis 8 située sensiblement au droit du fond 18 de la rainure en V (voir figure 9), cette vis se vissant dans le manchon 14 et permettant de ce fait de plaquer la partie inférieure de celui-ci sur la partie correspondante 12 de l'embase 1. Ceci évite un jeu selon l'axe XX du manchon 15 rigidement maintenu à l'intérieur de l'embase 1, jeu qui pourrait être préjudiciable à l'alignement des embouts 2. D'une manière générale en effet, la solidarisation du manchon et de l'embase est réalisée sous la rainure en V du manchon d'alignement dont l'épaisseur à cet endroit-là est bien calibrée, en réalisant un contact intime entre l'enveloppe extérieure du manchon et l'enveloppe intérieure de l'embase, sensiblement tout au long de la génératrice de contact.

L'épaisseur calibrée des parois du manchon d'alignement s'obtient en pratique en plaçant les parois internes de celui-ci à une distance très précise de l'enveloppe cylindrique extérieure de ce manchon. Lorsqu'on moule ce manchon, il est généralement nécessaire de prévoir des parois d'épaisseurs sensiblement constantes au niveau du V pour obtenir une bonne planéité.

Le montage des fiches est réalisé grâce à deux filetages 34 disposés chacun à une extrémité de l'embase 10, sur lesquels viennent se visser les bagues de verrouillage 5, la collerette 30 de chaque corps de fiche 1 étant serrée contre l'extrémité de l'embase 10 par la collerette 33 de la bague de verrouillage 5 correspondante, de telle sorte que le corps de fiche 1 soit rigidement lié à l'embase 10, les rattrapages de jeu étant assurés uniquement par l'embout flottant 2.

Plus particulièrement à la figure 9, on remarquera le jeu latéral j, k de la languette élastique 15 dans la rainure de guidage et détrompage 13, permettant en particulier un auto-centrage de cette languette 15 par rapport à la face semi-circulaire de l'embout après introduction de celui-ci dans le manchon 14. Cet auto-centrage assure une symétrie des forces appliquées sur chacun des embouts. Ces jeux latéraux j, k et h permettent de plus une introduction aisée du manchon d'alignement muni de sa languette élastique 15 à l'intérieur de l'embase lors du montage du dispositif selon l'invention avant solidarisation par la vis 28. Lorsque le manchon 14 est en matière plastique moulée, il convient de ne pas trop serrer la vis 8 pour éviter le cambrage du manchon autour du point 34. La vis 8 est alors bloquée par une coulée de résine durcissable dans le trou 7.

Le corps de fiche 1, l'embout 2, le limiteur 4, la bague de verrouillage 5, l'écrou arrière 8, aussi bien que le manchon d'alignement 14 et l'embase 10 peuvent être réalisés simplement en matière plastique moulée, malgré la précision requise pour l'alignement des fibres optiques. Les matières thermo-plastiques courantes pour le moulage tels que les polyamides, polycarbonates, polysulfores, etc... conviennent bien pour ces réalisations. La languette élastique dans le présent exemple de réalisation exposé ci-dessus est faite à partir d'un ruban plat de métal.

L'invention ne se limite pas aux modes de réalisation décrits ci-dessus. Ainsi, il est possible que la ferrule 6 et le limiteur 4 constituent une seule pièce. D'autre part, le sertissage du câble tel que représenté à la figure 5 n'est qu'un des modes de réalisation possibles. Ainsi, le maintien de la gaine de tout type de câble dans la fiche pourra être obtenu par les techniques bien connues de l'homme de l'art.

**Revendications**

1. Connecteur de fibres optiques comprenant un raccord (10) comportant un manchon d'alignement (14) pour connecter deux fiches optiques, les fiches étant du type à embout (2) flottant dans un corps de fiche (1), un élément de rappel élastique (3) poussant l'embout en butée contre une extrémité aval du corps de fiche (2), chaque fiche étant fixée au raccord par un dispositif de verrouillage (5), des moyens de positionnement angulaire étant prévus entre embout et corps de fiche correspondant, et également entre corps de fiche et raccord, caractérisé en ce que les sections des embouts (2) et du manchon d'alignement (14) possèdent des formes en V complémentaires, les moyens de positionnement angulaire entre embout (2) et corps de fiche (1) comprenant au moins une projection (22, 23) disposée à l'extrémité aval du corps de fiche s'engageant dans une rainure (63, 64) disposée sur l'embout et de sorte que celui-ci ait un degré de liberté en rotation limité autour de son axe, les moyens de positionnement angulaire entre corps de fiche (1) et raccord (10) étant formés de nervures (24, 25) portées par le corps de fiche (1) qui s'emboîtent dans des rainures (13, 29) internes du raccord (10) de manière à réaliser le détrompage et le guidage de la fiche dans le raccord, le manchon d'alignement étant maintenu fixe dans le raccord.

2. Connecteur selon la revendication 1, caractérisé en ce que l'embout (2) présente une collerette (67) formant butée (65) sur la projection (22, 23) du corps de fiche et dans laquelle est formée ladite rainure (63, 64).

3. Connecteur selon l'une des revendications 1 ou 2, caractérisé en ce que l'élément de rappel élastique est un ressort (3) comprimé dans le corps de fiche (1) par un limiteur (4) bloqué dans le corps de fiche par un écrou arrière (8).

4. Connecteur selon la revendication 3, caractérisé en ce que chaque fiche comporte une ferrule cylindrique (6) de maintien de la gaine (60) d'un câble optique, cette ferrule présentant une collerette (56) bloquée dans le corps de fiche par l'écrou arrière (8).

5. Connecteur selon la revendication 4, caractérisé en ce que la ferrule (6) est associée à une canule cylindrique (9) dans laquelle est passée la gaine (60) du câble et autour de laquelle est passé à retournement un élément (59) de la gaine du câble résistant à la traction, la canule (9) et la ferrule (6) étant serties ensemble.

6. Connecteur selon l'une quelconque des revendications 3 à 5, caractérisé en ce que le dispositif de verrouillage est, avant la fixation de la fiche sur le raccord, déplaçable longitudinalement, ses mouvements étant limités à l'avant par le corps de fiche (1) et vers l'arrière par l'écrou arrière (8).

7. Connecteur selon l'une quelconque des revendications 1 à 6, caractérisé en ce que le dispositif de verrouillage est constitué par une bague (5) taraudée et vissable sur le raccord (10), la bague étant munie d'une collerette interne (33) qui, en position de verrouillage, presse le corps de fiche (1) contre une extrémité du raccord.

8. Connecteur selon l'une quelconque des revendications 1 à 7, caractérisé en ce que le manchon (14) d'alignement possède des moyens de rappel élastique (15) pour plaquer les embouts (2) selon leurs sections en forme de V.

## Claims

1. Connector for optical fibres, comprising a connection (10) including an aligning sleeve (14) for connecting two optical plugs, the plugs being of the type having a connection member (2) floating in a plug body (1), a resilient return element (3) urging the connection member in abutment with a forward extremity of the plug body (2), each plug being fixed to the connection by a locking device (5), angular positioning means being provided between the connection member and the corresponding plug body and also between the plug body and the connection, characterized in that the sections of the connection members (2) and the aligning sleeve (14) are of complementary V-shapes, the angular positioning means between the connection member (2) and the plug body (1) comprising at least one projection (22, 23) disposed at the forward end of the plug body and engaging into a groove (63, 64) disposed on the connection member such that it has a degree of liberty for limited rotation about its axis, the angular positioning means between the plug body (1) and the connection (10) being provided with ribs (24, 25) carried by the plug body (1), which extend in internal grooves (13, 29) of the connection (10) such as to provide for positioning and guiding of the plug in the connection, the aligning sleeve being maintained fixed in the connection.

2. Connector according to claim 1, characterized in that the connection member (2) comprises a collar (67) forming an abutment (65) for the projection (22, 23) of the plug body, said groove (63, 64) being formed therein.

3. Connector according to any of claims 1 or 2, characterized in that the resilient return element is a spring (3) compressed in the plug body (1) by a limiter (4) fixed in the plug body by a rear nut (8).

4. Connector according to claim 3, characterized in that each plug comprises a cylindrical ferrule (6) for maintaining the sleeve (60) of an optical cable, said ferrule presenting a collar (56) fixed in the plug body by a rear nut (8).

5. Connector according to claim 4, characterized in that the ferrule (6) is associated with a cylindrical tube (9) into which the sleeve (60) of the cable extends and about which an element (59) of the cable sleeve resisting the traction is rebent, the tube (9) and the ferrule (6) being connected together by deformation.

6. Connector according to any of claims 3 to 5, characterized in that the locking device is longitudinally displaceable before the plug is fixed on the connection, its movements being limited in a forward direction by the plug body (1) and in a rear direction by the rear nut (8).

7. Connector according to any of claims 1 to 6, characterized in that the locking device is comprised of a tapped ring (5) adapted to be threadably engaged on the connection (10), the ring being provided with an internal collar (33) which, when in the locking position, urges the plug body (1) against an end of the connection.

8. Connector according to any of claims 1 to 7, characterized in that the aligning sleeve (14) includes resilient return means (15) for placing the connection members (2) in accordance with their V-shaped cross-sections.

## Patentansprüche

1. Verbinder für Lichtleiter, mit einem Anschluß (10), der eine Zentrierhülse (14) zum Verbinden zweier optischer Stecker aufweist, wobei die Stecker mit einem im Steckerkörper (1) schwimmend gelagerten Anschlußteil (2) ausgebildet sind, wobei eine elastisches Rückholteil (3) das Anschlußteil in Anlage mit einem vorderen Ende des Steckerkörpers (2) drückt, wobei jeder Stecker am Anschluß durch eine Verriegelungsvorrichtung (5) befestigt ist, und wobei Winkelpositioniermittel zwischen dem Anschlußteil und dem entsprechenden Steckerkörper sowie zwischen dem Steckerkörper und dem Anschluß vorgesehen sind, dadurch gekennzeichnet, daß die Querschnitte des Anschlußteiles (2) und der Zentrierhülse (14) komplementäre V-Formen besitzen, wobei die Winkelpositioniermittel zwischen dem Anschlußteil (2) und dem Steckerkörper (1) mindestens einen Vorsprung (22, 23) aufweisen, der am vorderen Ende des Steckerkörpers angeordnet ist und in eine am Anschlußteil vorgesehene Nut (63, 64) so greift, daß dieser eine begrenzte Drehbewegung um seine Achse ausführen kann, wobei die Winkelpositioniermittel zwischen dem Steckerkörper (1) und dem Anschluß (10) mit von dem Steckerkörper (1) getragenen Leisten (24, 25) versehen ist, die in Innenuten (13, 29) des Anschlusses (10) sitzen, derart, daß sie den Stecker im Anschluß positionieren und führen, wobei die Zentrierhülse in dem Anschluß festgelegt ist.

2. Verbinder nach Anspruch 1, dadurch gekennzeichnet, daß das Anschlußteil (2) einen Kragen (67) aufweist, der einen Anschlag (65) für den Vorsprung (22, 23) des Steckerkörpers bildet und in dem die Nut (63, 64) gebildet ist.

3. Verbinder nach Anspruch 1 oder 2, dadurch gekennzeichnet, daß das elastische Rückholteil eine Feder (3) ist, die in dem Steckerkörper (1) durch einen Begrenzer (4) komprimiert wird, welcher im Steckerkörper durch eine hintere Schraube (8) festgelegt ist.

4. Verbinder nach Anspruch 3, dadurch gekennzeichnet, daß jeder Stecker ein zylindrisches Metallteil (6) zum Halten der Hülle (60) eines Lichtleiterkabels aufweist, wobei dieses Metallteil einen Kragen (56) besitzt, der in dem Steckerkörper durch eine hintere Mutter (8) festgelegt ist.

5. Verbinder nach Anspruch 4, dadurch gekennzeichnet, daß das Metallteil (6) einem zylindrischen Röhrchen (9) zugeordnet ist, in welchem die Hülle (6) des Kabels verläuft und um welches ein den Zugkräften widerstehendes Element (59) der Kabelhülle herumgebogen ist, wobei das Röhrchen (9) und das Metallteil (6) durch eine Verformung miteinander verbunden sind.

6. Verbinder nach einem der Ansprüche 3-5, dadurch gekennzeichnet, daß die Verriegelungsvorrichtung vor Befestigung des Steckers am Anschluß in Längsrichtung verschiebbar ist, wobei seine Bewegungen in Vorwärtsrichtung durch den Steckerkörper (1) und in Rückwärtsrichtung durch die hintere Mutter (8) begrenzt sind.

7. Verbinder nach einem der Ansprüche 1-6, dadurch gekennzeichnet, daß die Verriegelungsvorrichtung von einem Ring (5) gebildet wird, der mit Gewinde versehen ist und auf den Anschluß (10) aufschraubbar ist, wobei der Ring mit einem inneren Kragen (33) versehen ist, der in der Verriegelungsstellung den Steckerkörper (1) gegen ein Ende des Anschlusses andrückt.

8. Verbinder nach einem der Ansprüche 1-7, dadurch gekennzeichnet, daß die Zentrierhülse (14) elastische Rückholmittel (15) besitzt, um die Anschlußteile (2) gemäß ihren V-förmigen Querschnitten anzuordnen.

FIG_1

FiG_2·a

FiG_2·b

FiG_3

FiG_4

FiG_5

FiG_6-a   FiG_6-b   FiG_7   FiG_8   FiG_9

3